# EUROPEAN PATENT APPLICATION

(11) **EP 4 723 039 A1**
(43) Date of publication of application: **08.04.2026**
(21) Application number: 25203273.5
(22) Date of filing: 19.09.2025
(51) Int. Cl.: G06T 7/73, G06T 7/80

(54) **DETERMINING A CHANGE IN A FIELD OF VIEW OF A CAMERA FOR AN APRON AREA OF AN AIRPORT**

(30) Priority: 25.09.2024 IN 202411072401
(71) Applicant: HONEYWELL INTERNATIONAL INC., Charlotte, NC 28202 (US)
(72) Inventor: GUPTA, Anchal, Charlotte, 28202 (US); ESWARA, Lalitha M., Charlotte, 28202 (US); K, Venugopal, Charlotte, 28202 (US)
(74) Representative: Haseltine Lake Kempner LLP

(57) **Abstract**

Devices, systems, and methods for determining a change in a field of view of a camera for an apron area of an airport are described herein. In some examples, one or more embodiments include a memory and a processor to execute instructions stored in the memory to compare a ground center line (GCL) mask, generated from an image of an apron area of an airport captured by a camera, with a reference GCL mask, determine whether a field of view (FOV) of the camera has changed from a calibrated FOV of the camera based on the comparison, and generate a notification based on the determination.

## Description

### Technical Field

The present disclosure relates to devices, systems, and methods for determining a change in a field of view of a camera for an apron area of an airport.

### Background

Airports have increasingly been adopting systems generally referred to as visual docking guidance systems (VDGS) in an apron area of an airport to manage aircraft on the ground and gate area functions. An apron area of an airport can include and/or refer to the area(s) of the airport where aircraft are parked, loaded and unloaded, boarded, refueled, and/or maintained. For instance, an apron area of an airport can include a designated area for parking (e.g., docking) an aircraft, such as a stand or gate.

Each VDGS can include a sensor data processing unit, a docking controller, a display unit, and at least one video, radio detection and ranging (RADAR) sensor, and/or light detection and ranging (LIDAR) sensor. A VDGS can be used, for example, to assist an aircraft in positioning itself in a particular position in front of a gate in the apron area.

### Brief Description of the Drawings

Figure 1 is an example of a system for determining a change in a field of view of a camera for an apron area of an airport, in accordance with one or more embodiments of the disclosure.
Figure 2 illustrates an example of a method for generating a GCL mask for determining a change in a field of view of a camera for an apron area of an airport, in accordance with one or more embodiments of the disclosure.
Figure 3A illustrates an input image for generating the GCL mask, in accordance with one or more embodiments of the disclosure.
Figure 3B illustrates a modified input image for generating a yellow-filtered GCL mask, in accordance with one or more embodiments of the disclosure.
Figure 3C illustrates the generated yellow-filtered GCL mask, in accordance with one or more embodiments of the disclosure.
Figure 4A illustrates a modified input image for generating a line GCL mask, in accordance with one or more embodiments of the disclosure.
Figure 4B illustrates line detection of a black and white (BW) color space image for generating a line GCL mask, in accordance with one or more embodiments of the disclosure.
Figure 4C illustrates filtered lines in the BW color space image for generating a line GCL mask, in accordance with one or more embodiments of the disclosure.
Figure 4D illustrates the generated line GCL mask, in accordance with one or more embodiments of the disclosure.
Figure 5 illustrates a generated GCL mask for determining a change in a field of view of a camera for an apron area of an airport, in accordance with one or more embodiments of the disclosure.
Figure 6 illustrates an example of a method for determining a change in a field of view of a camera for an apron area of an airport, in accordance with one or more embodiments of the disclosure.
Figure 7A illustrates an example of a first field of view of a camera and a second field of view of the camera, in accordance with one or more embodiments of the disclosure.
Figure 7B illustrates an example of a comparison of a generated GCL mask with a reference GCL mask, in accordance with one or more embodiments of the disclosure.
Figure 8 illustrates an example of a method for automatically correcting a field of view of a camera to a calibrated field of view, in accordance with one or more embodiments of the disclosure.
Figure 9 is an example of a computing device for determining a change in a field of view of a camera for an apron area of an airport, in accordance with one or more embodiments of the disclosure.

### Detailed Description

Devices, systems, and methods for determining a change in a field of view of a camera for an apron area of an airport are described herein. In some examples, one or more embodiments include a memory and a processor to execute instructions stored in the memory to compare a ground center line (GCL) mask, generated from an image of an apron area of an airport captured by a camera, with a reference GCL mask, determine whether a field of view (FOV) of the camera has changed from a calibrated FOV of the camera based on the comparison, and generate a notification based on the determination.

To ensure the safe operation of aircraft at an airport, it is important to keep the apron area free of objects (e.g., obstacles) prior to and during the docking process. For instance, unnoticed objects in the apron area, including objects having different sizes (e.g., 30 centimeters (cm) by 30 cm or 50 cm by 50 cm), can be sucked into the engines of the aircraft and/or be collided with by the aircraft, which can damage the aircraft. Such objects may include baggage or other items that may be located in the apron area but should not be located in the apron area, among other examples.

To keep an apron area free from objects that should not be in the apron area, airports may utilize a video feed from the VDGS system. The video feed can be, for example, from a camera located in and/or proximate to the apron area, and may in some instances be included as part of the VDGS system itself.

When the camera is installed/commissioned, a field of view (FOV) of the camera can be initially calibrated so that processing of the images for object detection can occur. The FOV of the camera can be calibrated to include the apron area associated with a particular location, such as a stand or gate, at the airport.

However, at an airport, the camera may be exposed to forces that can cause the FOV of the camera to be altered. In some examples, weather conditions such as high winds may impart vibrations on the camera which can cause the camera to move (e.g., tilt, rotate, etc.), causing the FOV to change. In other examples, the camera may be moved due to an interaction with a person (e.g., maintenance personnel, or a bad actor (e.g., sabotage)), wildlife (e.g., birds, etc.), among other examples.

If the FOV of the camera is changed, object detection in the apron area may be affected. For example, an altered FOV of the camera (e.g., from a calibrated FOV) may result in a portion of the apron area not being in the altered FOV of the camera. This may also result in a portion of an aircraft in the apron area not being in the altered FOV of the camera. As a result, an object such as luggage fallen off of a baggage cart may be located in the apron area but be positioned outside of the altered FOV of the camera.

Such an object may not be detected by the VDGS system. This can be a safety hazard for the aircraft, ground crew, etc., and may cause damage to the aircraft if the aircraft collides with the object, the object is sucked into the aircraft's engine, etc.

Previous approaches to FOV change determination may utilize specific physical objects added to an area within the FOV of the camera. For example, such objects may include a specific pattern, such as a checkerboard pattern, for the camera to utilize as an FOV reference point. However, in the case of an airport, such objects are not allowed to be added to an apron area. For example, jurisdictional rules, aviation regulatory guidelines, and/or other laws/regulations may not allow for such objects to be added to an apron area of an airport.

Accordingly, determining a change in a field of view of a camera for an apron area of an airport can allow for detection of a FOV change in a camera for an apron area of an airport. For example, a ground center line (GCL), which is a preexisting marking in an apron area of an airport utilized by aircraft, can be utilized as an FOV reference point. Images from a video feed of a camera in the apron area can be processed and compared to a reference GCL mask to determine, utilizing the GCL in the apron area, whether an FOV of the camera has changed. If the FOV of the camera is changed, the camera position can be modified to bring the FOV back to the calibrated FOV, ensuring that the VDGS system is able to continue to detect objects located in the apron area that should not be located in the apron area. Accordingly, the safety of the apron area of the airport can be improved, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

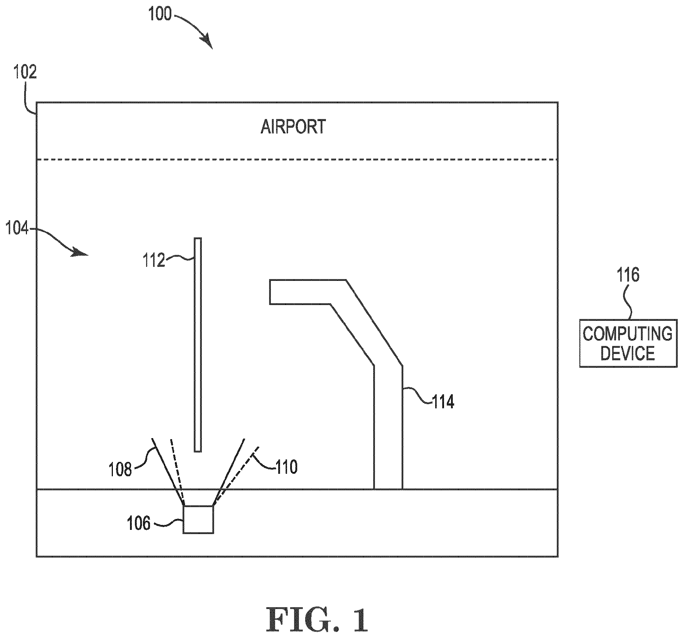

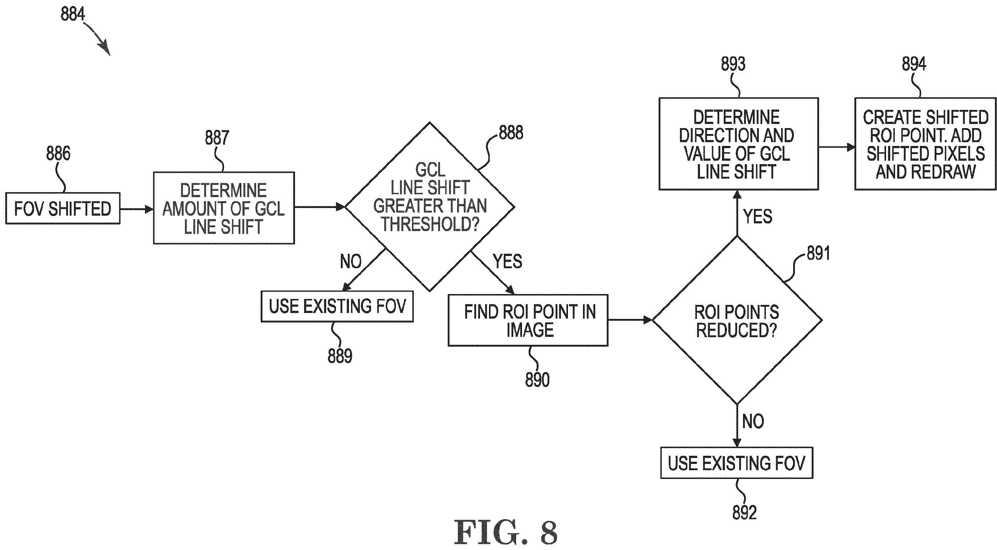

The figures herein follow a numbering convention in which the first digit or digits correspond to the drawing figure number and the remaining digits identify an element or component in the drawing. Similar elements or components between different figures may be identified by the use of similar digits. For example, 116 may reference element "16" in Figure 1, and a similar element may be referenced as 816 in Figure 8.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for determining a change in a field of view of a camera 106 for an apron area 104 of an airport 102, in accordance with one or more embodiments of the disclosure. The system 100 can include an airport 102 and a computing device 116.

As illustrated in Figure 1, the system 100 can include an airport 102. The airport 102 can be a physical area having runways and taxiways for the takeoff, landing, and ground-movement of aircraft, as well as other facilities for the maintenance of the aircraft and/or terminals for direction of passengers.

An apron area 104 can exist at the airport 102. As used herein, an "apron area" of an airport can include and/or refer to any area of an airport where aircraft are parked, loaded and unloaded, boarded, refueled, and/or maintained. For instance, the apron area 104 of the airport 102 can include a designated area for parking (e.g., docking) an aircraft. As an example, the apron area 104 can include an area extending 100 meters from a gate of a terminal, although the size of the apron area 104 may vary from airport to airport (e.g., may extend a distance greater than 100 meters or less than 100 meters).

An aircraft may be parked proximate to, for instance, a jet bridge 114. The jet bridge 114 may allow for the easy loading/unloading of passengers, and the jet bridge 114 may also be located in the apron area 104.

To assist with the positioning of the aircraft in the apron area 104, the airport 102 may include a ground center line (GCL) 112. As used herein, the term "ground center line" refers to a physical line provided on the ground (e.g., tarmac, concrete, etc.) in an apron area of an airport. The GCL 112 can be a decal, be painted onto the apron area 104, etc. The GCL 112 can indicate to the pilot of an aircraft the correct path to follow to position the aircraft in the correct position and orientation within the apron area 104. Additionally, the GCL 112 can include further markings that can allow for the positioning and orientation of different types of aircraft serviced by the airport 102.

Although the airport 102 is illustrated in Figure 1 and described above as including an apron area 104 having a single jet bridge 114 and GCL line 112, embodiments are not so limited. For example, the airport 102 may include a plurality of jet bridges 114 each having an associated GCL line 112 in order to service multiple aircraft simultaneously.

As illustrated in Figure 1, the airport 102 can further include a camera 106. The camera 106 can include a field of view (FOV). As used herein, the term "FOV" refers to an observable area an optical device is able to image. The camera 106 can be positioned at the airport 102 such that the FOV of the camera 106 can include the physical GCL line 112 located on the apron area 104 of the airport 102. The camera 106 can be associated with the illustrated apron area 104.

As mentioned above, the airport 102 may include a plurality of jet bridges and associated GCL lines, and as such, each of the plurality of jet bridges and associated GCL lines may include a respective camera. The respective cameras can be in communication with the computing device 116 for determining a change in a field of view of such respective cameras for such respective apron areas at the airport 102.

As mentioned above, when the camera 106 is installed/commissioned, the FOV of the camera 106 can be calibrated such that the camera 106 includes a calibrated FOV 108. The calibrated FOV 108 can include the physical GCL 112 located on the apron area 104 of the airport 102. Additionally, in an example in which an aircraft parks in the apron area 104 utilizing the GCL line 112, the calibrated FOV 108 can include the entirety of the aircraft in the calibrated FOV 108.

Although not illustrated in Figure 1 for clarity and so as not to obscure embodiments, the camera 106 can be included as part of the VDGS system. The VDGS system may further include RADAR and/or LIDAR sensors, which may also be located at or near the camera 106. The RADAR and/or LIDAR sensors can operate to further aid in detecting objects in the apron area 104 as part of the VDGS system.

During the installation/commissioning of the camera 106, the camera 106 can be specifically positioned at the airport 102. For instance, the camera 106 can be located at the airport 102 such that the calibrated FOV 108 can be substantially perpendicular to the GCL 112 located on the apron area 104. As used herein, the term "substantially" intends that the characteristic does not have to be absolute but is close enough so as to achieve the characteristic. For example, "substantially perpendicular" is not limited to absolute perpendicular. For instance, the calibrated FOV 108 can be within 0.5°, 1°, 2°, 5°, etc. of absolutely perpendicular to the GCL 112. The positioning of the camera 106, and the calibrated FOV 108 being substantially perpendicular to the GCL 112, can allow for instances in which the apron area 104 includes multiple GCL lines for the jet bridge 114, as certain GCL lines in an apron area 104 may be angled with respect to the GCL line 112 for different aircraft types (e.g., to allow for larger/smaller aircraft to park in the apron area 104, as aircraft may include different fuselage sizes, wing sizes, wing orientations, engine numbers/sizes, etc.).

As illustrated in Figure 1, the system 100 further includes the computing device 116. The computing device 116 can be in communication with the camera 106 via a network relationship. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

The computing device 116 can receive a video feed from the camera 106, an image from the video feed of the camera 106, etc. The video feed/image from the video feed can be defined by the calibrated FOV 108 of the camera 106 and can include the GCL 112 and a portion of the apron area 104. Utilizing the image from the video feed, the computing device 116 can determine a change in the FOV of the camera 106 (e.g., whether there is a change in the FOV from the calibrated FOV 108 to a modified FOV 110) for the apron area 104 of the airport 102, as is further described herein.

In order to determine whether the calibrated FOV 108 of the camera 106 has changed to a modified FOV 110, the computing device 116 can compare a GCL mask of the image of the apron area including the GCL 112 to a reference GCL mask. Based on the comparison, the computing device 116 can determine whether the FOV of the camera 106 has changed, as is further described herein.

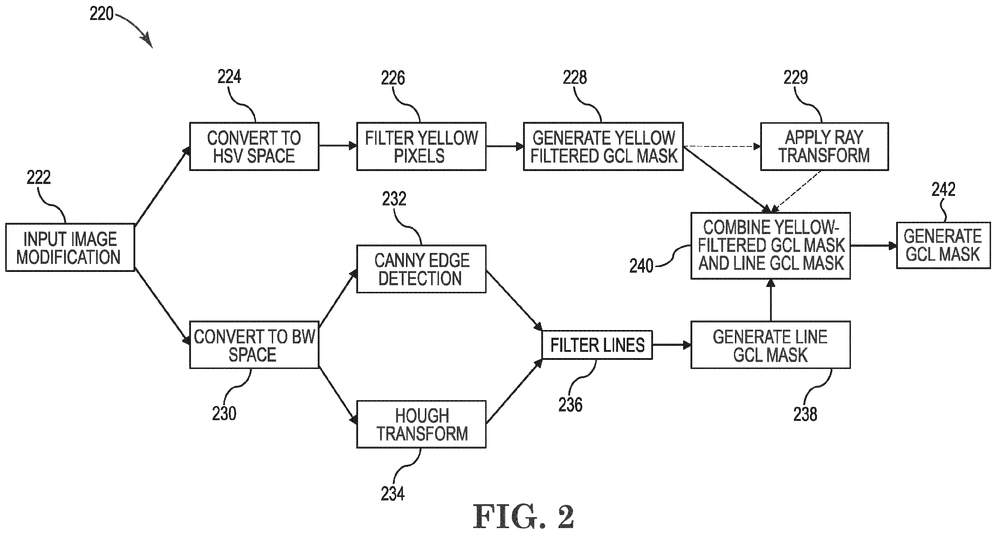

Utilizing the image from the camera 106, the computing device 116 can generate a GCL mask from the image captured by the camera 106 of the apron area 104. As used herein, the term "GCL mask" refers to an image having two bitmaps in which unused areas are given a pixel value with all bits set to 0 and the remaining areas are given a pixel value with all bits set to 1. For example, the GCL mask is a digital binary image of the apron area 104 in which portions of the digital binary image are hidden according to certain parameters (e.g., yellow filtering and edge detection/transforms). The generation of the GCL mask and the reference GCL mask are further described in connection with Figures 2-5.

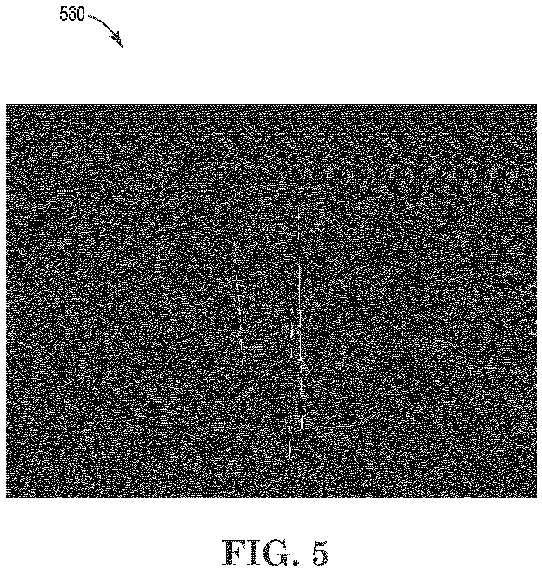

The computing device 116 can generate the GCL mask such that the GCL mask can be a digital binary image of the GCL 112. For example, the GCL mask can be an image in which the used areas in the image, such as the GCL line 112, is shown, whereas the remaining portions of the image (e.g., everything else in the image including the apron area 104, jet bridge 114, any aircraft in the image, etc.) are not shown. The generated GCL mask is further illustrated and described in connection with Figure 5.

Following generation of the GCL mask, the computing device 116 can compare the GCL mask with a reference GCL mask. The reference GCL mask can be generated in a similar manner as the GCL mask, but generated at a time when the FOV of the camera is known to be calibrated. Accordingly, the reference GCL mask can be associated with the calibrated FOV 118 of the camera 106.

Accordingly, the computing device can determine whether an FOV of the camera 106 has changed. That is, by comparing the generated GCL mask, taken from an image during operation of the camera 106, with the reference GCL mask, taken from a reference image during calibration of the camera 106, the computing device 116 can determine whether the FOV of the camera 106 has changed from the calibrated FOV 108 to a modified FOV 110 based on the comparison.

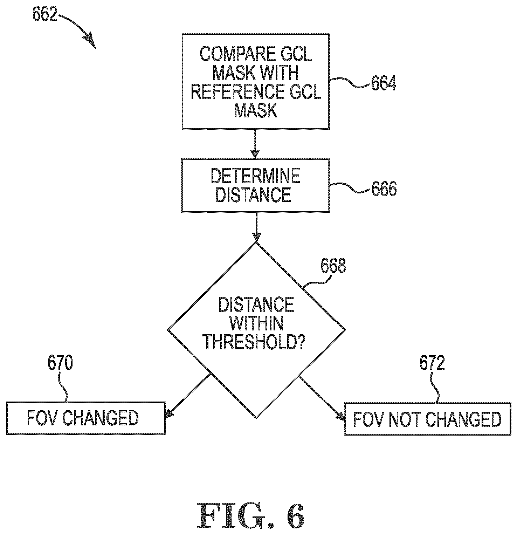

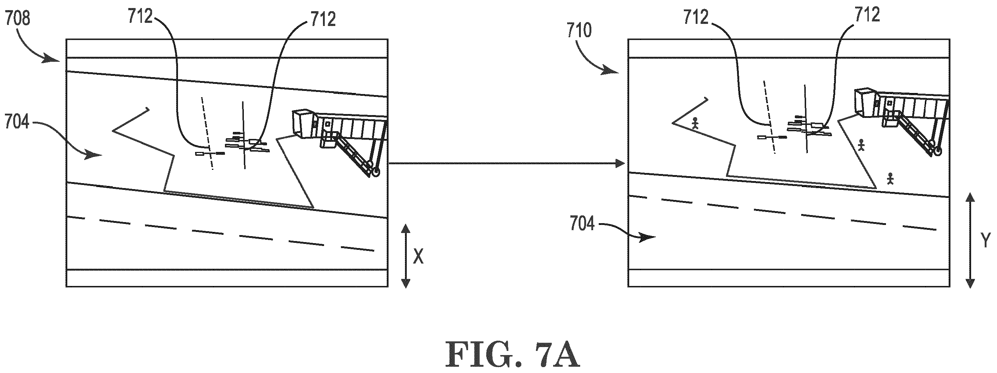

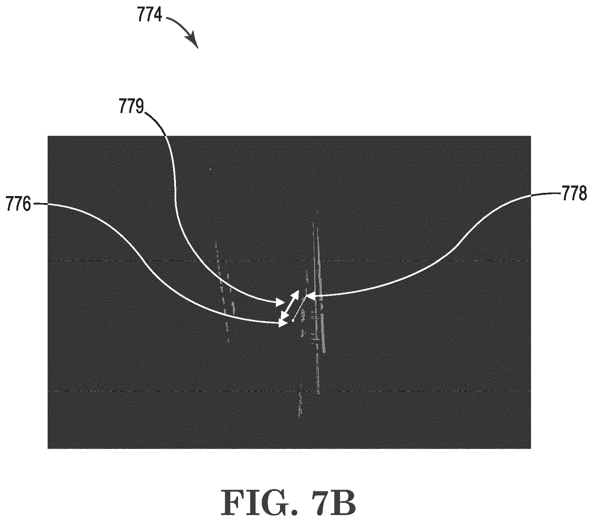

In order to determine whether the FOV of the camera has changed, the computing device 116 can compare a distance between a reference point of the GCL mask and a reference point of the reference GCL mask. If the distance between the two reference points exceeds a threshold amount, the computing device 116 can determine the FOV of the camera has changed from the calibrated FOV 108 to the modified FOV 110. Such an FOV change may be due to forces imparted onto the camera 106 due to weather, by a user (e.g., maintenance, construction, etc.), and/or the environment (e.g., wildlife, earthquakes, etc.). The reference point comparison between the GCL mask and the reference GCL mask is further described in connection with Figures 6 and 7.

In an event in which the computing device 116 determines the calibrated FOV 108 of the camera 106 has changed to the modified FOV 110, the computing device 116 can generate a notification. The notification can serve to alert a user that the FOV of the camera 106 has been changed so that steps can be taken to address the change in the FOV. The notification can be transmitted to a mobile device of a user, another computing device (e.g., not illustrated in Figure 1) at the airport, a remote computing device (e.g., not illustrated in Figure 1), and/or to any other device.

The generation of the GCL mask and comparison to the reference GCL mask can be performed according to a predetermined schedule. For example, the computing device 116 can generate the GCL mask and compare the generated GCL mask to the reference GCL mask every hour, every 4 hours, every 8 hours, etc. For instance, the computing device 116 can generate a first GCL mask and compare the first GCL mask to the reference GCL mask at 8 AM, generate a second GCL mask and compare the second GCL mask to the reference GCL mask at 12 PM, generate a third GCL mask and compare the third GCL mask to the reference GCL mask at 4 PM, etc. The generation and comparison of GCL masks can continue unless the computing device 116 determines the FOV of the camera 106 has changed from the calibrated FOV 108 to the modified FOV 110.

In some examples, the predetermined schedule can be modified according to various parameters. The predetermined schedule may be modified (e.g., automatically, or via a user input) according to the time of day, weather conditions, etc. For instance, the predetermined schedule during the daytime may include comparisons every 8 hours, and the predetermined schedule during nighttime may include comparisons every 4 hours. As another example, the predetermined schedule may include comparisons every 6 hours during good weather conditions (e.g., no precipitation, winds below a threshold velocity, etc.), but if weather conditions deteriorate (e.g., precipitation occurs, winds rise above the threshold velocity, etc.), the comparisons may be modified (e.g., automatically, or in response to a user input) to occur every 3 hours. Additionally, the predetermined schedule may be modified in accordance with combinations of the parameters (e.g., time of day and weather conditions) described above.

In some examples, the camera 106 can include predetermined positional settings associated with the calibrated FOV 108. For example, the camera 106 can include a movable mount onto which the camera 106 is installed. The movable mount may include a mechanism for adjusting the FOV of the camera 106 by tilting the camera 106, panning the camera 106, zooming the camera 106, among other types of movement. Accordingly, the predetermined positional settings for the movable mount for the camera 106 can be utilized to adjust the camera to correct the FOV, as is further described herein.

For example, in response to the computing device 116 determining the FOV of the camera 106 has changed from the calibrated FOV 108 to the modified FOV 110, the computing device 116 can cause the camera 106 to be adjusted to correct the FOV from the modified FOV 110 to the calibrated FOV 108. The computing device 116 can transmit instructions to the camera 106 to cause the mount of the camera 106 to adjust the positional settings to the predetermined positional settings in order to cause the FOV to be adjusted to the calibrated FOV 108.

As mentioned above, the computing device 116 can generate the GCL mask and the reference GCL mask to utilize for comparison to determine whether the FOV of the camera 106 has changed from the calibrated FOV 108 to the modified FOV 110. Generating a GCL mask is further described in connection with Figures 2-5.

Figure 2 illustrates an example of a method 220 for generating a GCL mask for determining a change in a field of view of a camera for an apron area of an airport, in accordance with one or more embodiments of the disclosure. The method 220 may be performed by, for example, a computing device such as computing device 116, previously described in connection with Figure 1.

As mentioned above, the computing device can generate a GCL mask for use in determining whether the FOV of a camera has changed from a calibrated FOV to a modified FOV. The computing device can generate the GCL mask according to a mask generation process, as further described herein as method 220.

The method 220 includes modifying, at 222, an input image from a video feed of the camera. Modification of the input image may include cropping portions of the input image in order to detect the GCL line in the input image, as is further described herein.

At 224, the mask generation process includes converting the input image of the apron area of the airport to a hue saturation value (HSV) color space image. The HSV color space can be utilized to describe colors in an image according to their hue (e.g., the color), saturation (e.g., the amount of gray in a particular color), and value (e.g., brightness or intensity of the color). Since GCL lines are provided in the apron area of the airport as a yellow color, the HSV color space can be utilized to characterize the pixels of the HSV color space image.

Since the GCL line is yellow, the method 220 can further include filtering, at 226, pixels of the HSV color space image. For example, the computing device can determine color values for each of the plurality of pixels that make up the HSV color space image and compare the color values for each pixel of the plurality of pixels to a predefined range of yellow color values. The computing device can determine a first subset of pixels of the plurality of pixels that make up the HSV color space image that have a color value (e.g., a hue) falling outside of the predefined range of yellow color values. The computing device can discard the first subset of pixels having color values that fall outside of the predefined range of yellow color values. For example, pixels in the first subset of pixels having colors that are not yellow and/or not yellow enough can be discarded.

Discarding the first subset of pixels results in the HSV color space image having a remaining second subset of pixels (e.g., the remaining subset of pixels of the plurality of pixels of the HSV color space image). The second subset of pixels in the HSV color space image are those pixels having a yellow color value falling inside of the predefined range of yellow color values. The result is that the second subset of pixels falling within the predefined range of yellow color values can define the GCL line in the HSV color space image.

Because the unique conditions at an airport, the yellow markings in the apron area of the airport making up the physical GCL line may include varying levels of yellow values, which can translate to varying yellow color values when the input image is converted into the HSV color space to form the HSV color space image. For example, portions of the GCL line may wear due to use (e.g., fading due to the deposition of rubber from aircraft tires onto the GCL line, flaking, etc.), environmental conditions (e.g., rain, snow, etc. may result in different yellow color values in the input image when captured by the camera and in the converted HSV color space image), the time of day in which the input image is captured (e.g., at night, the yellow color values may be different from during the day), and/or combinations thereof may result in the yellow color values of the GCL line varying. Therefore, the predefined range of yellow color values can be utilized in order to account for the variations in the color values.

Accordingly, at 228, the mask generation process includes generating a yellow-filtered GCL mask utilizing the second subset of pixels of the HSV color space. As mentioned above, the second subset of pixels can include those pixels of the HSV color space image having a yellow color value falling inside the predefined range. Accordingly, the yellow-filtered GCL mask can include lines in the yellow-filtered GCL mask corresponding to the physical GCL in the apron area.

In some examples, generation of the yellow-filtered GCL mask can result in the second subset of pixels illustrating a GCL line that is dashed. For example, the second subset of lines may come out as dashed lines due to varying/poor illumination/lighting from the input image as a result of the time of day the input image is captured (e.g., at night), adverse weather conditions at the airport at the time the input image was taken (e.g., cloudy weather, thunderstorms, etc.), wear of the physical GCL line (e.g., due to interaction with tires of aircraft or other vehicles in the apron area), etc. In order to account for the dashed second subset of lines, at 229, the computing device can apply a ray transform to the yellow-filtered GCL mask to extrapolate and extend lines in the second subset of lines in order to form a complete line.

The method 220 so far is described above as including generating the yellow-filtered GCL mask. However, the mask generation process further utilizes a line GCL mask in combination with the yellow-filtered GCL mask to generate the GCL mask, as is further described herein. Utilizing the yellow-filtered GCL mask in combination with the line GCL mask can ensure higher accuracy in the mask generation process as compared with solely utilizing the yellow-filtered GCL mask or the line GCL mask.

Accordingly, at 230, the mask generation process further includes additionally converting the input image of the apron area of the airport to a black and white (BW) color space image. The BW color space can be utilized to describe colors in an image according to a range of gray values that are achromatic in brightness. The BW color space can be utilized to detect a plurality of lines in the BW color space image, where the plurality of lines can be further filtered to result in a line GCL mask having the GCL, as is further described herein.

At 232, the mask generation process includes applying a Canny edge detector process to the BW color space image. The Canny edge detector process can include an algorithm that generally applies a Gaussian filter to smooth the BW color space image, determine the intensity gradients of the BW color space image, apply a gradient magnitude thresholding or lower bound cut-off suppression to remove spurious response to line detection, apply double threshold to determine potential lines, and track the lines by hysteresis. The detected lines can be potential lines in the BW color space image. While the detected lines include the GCL line, filtering can be done to remove lines that are not the GCL line, as is further described herein.

While the mask generation process is described above as utilizing the Canny edge detector process for the BW color space image, embodiments are not limited. For instance, because of environmental conditions, edge detection utilizing just the Canny edge detector process may not provide accurate line detection. For example, the airport may have received rain and a puddle formed on the GCL line in the apron area. The Canny edge detector process may detect the edges of the puddle as well as the edges of the GCL line. To address this, the method 220 can further utilize a Hough transform.

At 234, the mask generation process includes applying a Hough transform to the BW color space image. The Hough transform process can include a feature extraction algorithm that estimates parameters that define a straight line in order to detect lines in the BW color space image. The detected lines can be potential lines in the BW color space image. While the detected lines include the GCL line, filtering can be done to remove lines that are not the GCL line, as is further described herein.

As mentioned above, application of the Canny edge detector process and the Hough transform to the BW color space image can result in detection of a plurality of lines in the BW color space image. The plurality of lines can include the GCL line, as well as other lines from the BW color space image (e.g., textures associated with the taxiway surfaces, objects in the apron area such as aircraft or other vehicle edges, other objects in the apron area, physical lines in the apron area which are not GCL lines, light streaks from the input image, among other lines).

Therefore, at 236, the mask generation process includes filtering the plurality of lines in the BW color space image. To filter the plurality of lines, the computing device can compare an angle of each of the plurality of lines relative to a range of angles corresponding to the camera and the ground of the apron area/the physical GCL. The computing device can compare each angle of each of the plurality of lines in the BW color space image to a range of angles (e.g., 80 degrees (°) to 110°). The computing device can determine a first subset of lines of the plurality of lines that fall outside of the range of angles and a second subset of lines of the plurality of lines that fall inside the range of angles. The computing device can discard the first subset of lines falling outside of the range of angles, leaving the second subset of lines.

As previously mentioned in Figure 1, the camera can be positioned substantially perpendicular relative to the physical GCL located on the apron area. Accordingly, by defining the range of angles (e.g., 80° to 110°), the computing device can filter the first subset of lines as lines that are not associated with the physical GCL line, whereas the second subset of lines can be associated with the physical GCL line. Additionally, the range of angles can allow for instances in which the apron area includes multiple GCL lines so as to accommodate different types of aircraft in the apron area. As described above, the second subset of lines can be grouped according to the range of angles.

At 238, the mask generation process includes generating a line GCL mask. Generation of the line GCL mask can include filling in certain lines in the second subset of lines.

At this point in the method 220, the mask generation process has generated the yellow-filtered GCL mask as well as the line GCL mask. Therefore, at 240, the mask generation process includes combining the yellow-filtered GCL mask with the line GCL mask. Combining the yellow-filtered GCL mask with the line GCL mask can include overlaying the yellow-filtered GCL mask with the line GCL mask.

At 242, the method includes generating the GCL mask. The generated GCL mask is the result of the overlayed yellow-filtered GCL mask with the line GCL mask.

As previously described in connection with Figure 1, the GCL mask generated according to the method 220 can be compared against a reference GCL mask generated when the camera in the apron area was installed/commissioned. The reference GCL mask can be generated according to the same method 220.

Additionally, in an instance in which a revised reference GCL mask is to be generated (e.g., if the camera's FOV is not able to be changed back to the calibrated FOV), the method 220 can be utilized to generate a revised reference GCL mask.

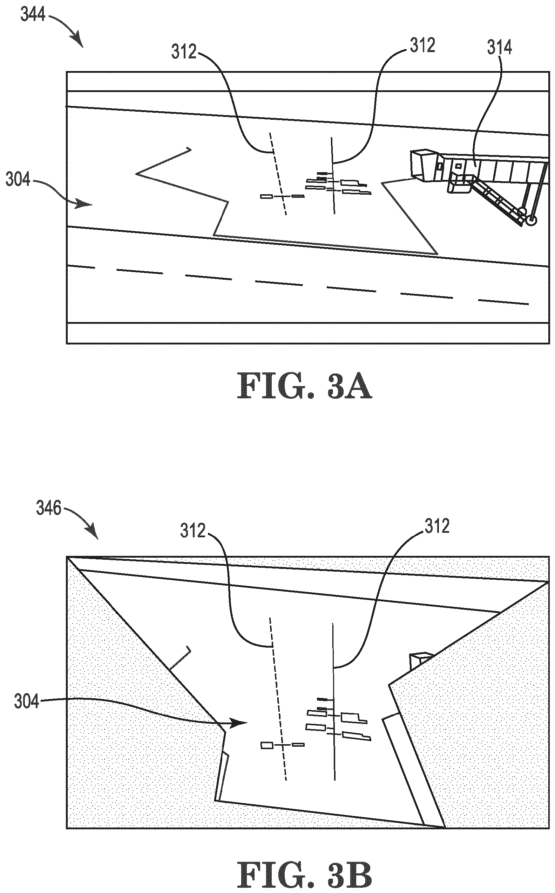

Figure 3A illustrates an input image 344 for generating the GCL mask, in accordance with one or more embodiments of the disclosure. The input image 344 can be captured by a camera.

As illustrated in Figure 3A, the input image 344 can show an FOV of the camera, where the FOV includes the apron area 304 (e.g., or a portion thereof), GCLs 312, and a portion of a jet bridge 314. The input image 344 can be modified as previously described in connection with Figure 2.

Figure 3B illustrates a modified input image 346 for generating a yellow-filtered GCL mask, in accordance with one or more embodiments of the disclosure. As illustrated in Figure 3B, the input image has been modified (e.g., cropped).

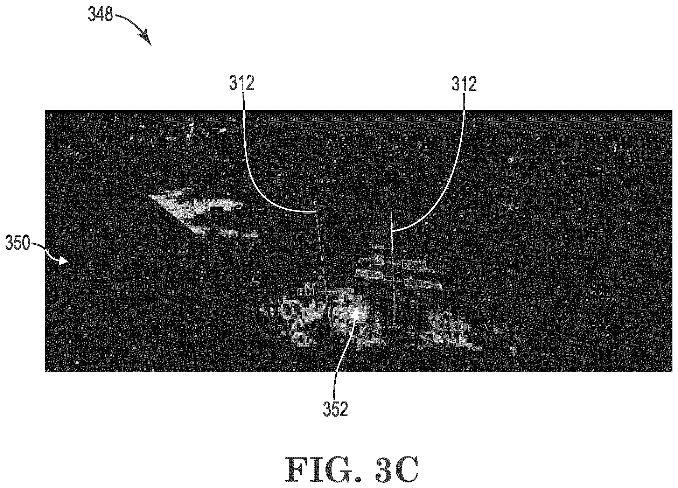

The computing device can utilize the modified input image to generate the yellow-filtered GCL mask. For example, the computing device can convert the modified input image 346 into an HSV color space. This can result in the modified input image 346 being an HSV color space image. As such, the pixel values in the HSV color space image can be utilized to filter the modified input image 346, as is further described in connection with Figure 3C.

Figure 3C illustrates the generated yellow-filtered GCL mask 348, in accordance with one or more embodiments of the disclosure. The computing device can filter the modified input image to generate the yellow-filtered GCL mask 348, as is further described herein.

To generate the yellow-filtered GCL mask 348, the computing device can filter the pixels of the HSV color space image by comparing the color values of each pixel of the plurality of pixels that make up the HSV color space image to a predefined range of yellow color values. The computing device can determine a first subset of pixels 350 that fall outside of the predefined range of yellow color values and discard the first subset of pixels 350 by filtering such pixels from the HSV color space image. Those pixels in the first subset of pixels 350 can be filtered by having pixel values with bits set to 0 (e.g., resulting in the first subset of pixels 350 not being visible in the HSV color space image).

The second subset of pixels 352 can be pixels having a yellow color value falling inside of the predefined range of yellow colors. Accordingly, generating the yellow-filtered GCL mask 348 includes discarding the first subset of pixels 350 while the remaining second subset of pixels 352 includes lines that can correspond to the GCL 312. However, as illustrated in Figure 3C, additional lines may still exist in the yellow-filtered GCL mask 348 as the additional lines include pixels having yellow color values falling inside of the predefined range of yellow colors. Accordingly, the yellow-filtered GCL mask 348 can be utilized in conjunction with a line GCL mask to generate the GCL mask, as is further described herein.

Additionally, as illustrated in Figure 3C, the second subset of pixels 352 may include representations of the GCL line as dashed lines. The dashed lines may be the result of varying/poor illumination/lighting from the input image as a result of the time of day the input image is captured (e.g., at night), adverse weather conditions at the airport at the time the input image was taken (e.g., cloudy weather, thunderstorms, etc.), wear of the physical GCL line (e.g., due to interaction with tires of aircraft or other vehicles in the apron area), etc. In order to address the dashed lines, the computing device can apply a ray transform to the yellow-filtered GCL mask 348 to extrapolate and extend lines in the second subset of lines in order to form a complete line.

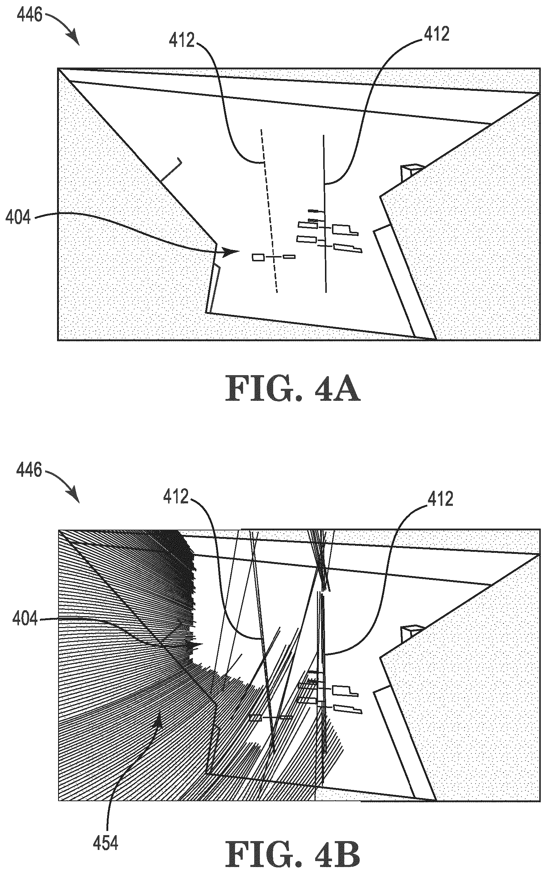

Figure 4A illustrates a modified input image 446 for generating a line GCL mask, in accordance with one or more embodiments of the disclosure. As illustrated in Figure 4A, the input image has been modified (e.g., cropped).

The computing device can utilize the modified input image to generate the line GCL mask. For example, the computing device can convert the modified input image 446 into a BW color space. This can result in the modified input image 446 being a BW color space image. A canny edge detector process and a Hough transform can be applied to the BW color space image to detect a plurality of lines in the modified input image 446 and generate a line GCL mask, as is further described in connection with Figures 4B-4D.

Figure 4B illustrates line detection of a BW color space image 446 for generating a line GCL mask, in accordance with one or more embodiments of the disclosure. The modified input image 446 can include a plurality of lines 454.

To detect the plurality of lines 454, the computing device can apply a Canny edge detector process to the BW color space image 446 and a Hough transform to the BW color space image 446. The Canny edge detector process and the Hough transform can detect the plurality of lines 454 in the BW color space image 446.

As illustrated in Figure 4B, the plurality of lines 454 include the GCL lines, but also include a variety of other lines associated with various other things from the input image, such as textures associated with the taxiway surfaces, objects in the apron area such as aircraft or other vehicle edges, other objects in the apron area, physical lines in the apron area which are not GCL lines, light streaks from the input image, etc.

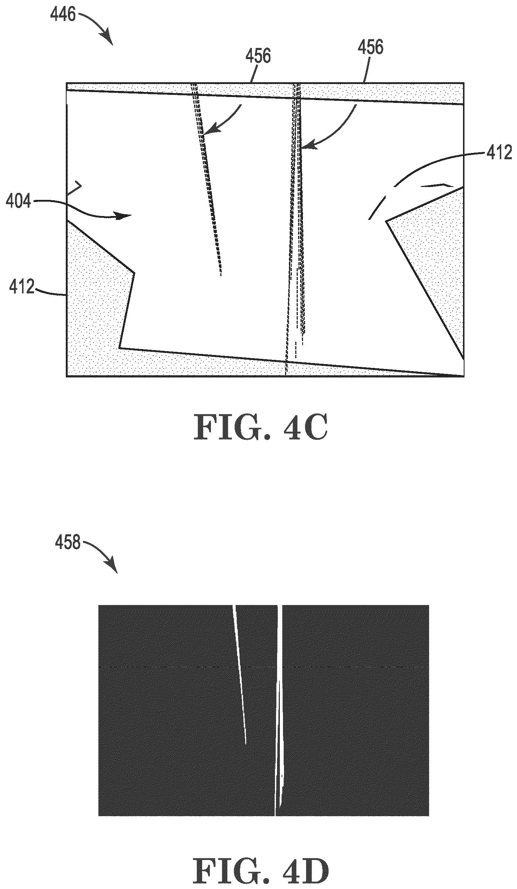

Figure 4C illustrates filtered lines 456 in the BW color space image 446 for generating a line GCL mask, in accordance with one or more embodiments of the disclosure. The computing device can filter the plurality of lines, as is further described herein.

The computing device can filter the plurality of lines by comparing an angle of each of the plurality of lines relative to a range of angles corresponding to the camera and the ground of the apron area/the physical GCL. For example, a first subset of lines having an angle falling outside of the range of angles can be discarded, whereas a second subset of lines falling within the range of angles can be kept. The second subset of lines correspond to the filtered lines 456 as illustrated in Figure 4C. Additionally, such filtered lines 456 correspond to the GCL line 412 in the apron area 404.

Figure 4D illustrates the generated line GCL mask 458, in accordance with one or more embodiments of the disclosure. The computing device can generate the generated line GCL mask 458. The computing device can generate the line GCL mask 458 by grouping and filling the second subset of lines.

Figure 5 illustrates a generated GCL mask 560 for determining a change in a field of view of a camera for an apron area of an airport, in accordance with one or more embodiments of the disclosure. The GCL mask 560 can be generated utilizing the yellow-filtered GCL mask (e.g., yellow-filtered GCL mask 348, previously described in connection with Figures 3A-3C) and the line GCL mask (e.g., (e.g., line GCL mask 458, previously described in connection with Figures 4A-4D).

Generating the GCL mask 560 can include combining the yellow-filtered GCL mask and the line GCL mask. For example, the yellow-filtered GCL mask and the line GCL mask can be overlayed on each other. The portions of the GCL line that matchup between the overlayed yellow-filtered GCL mask and the line GCL mask can be kept and the remaining lines discarded. As a result, the GCL mask can be utilized to determine whether an FOV of the camera has changed, as is further described herein.

Figure 6 illustrates an example of a method 662 for determining a change in a field of view of a camera for an apron area of an airport, in accordance with one or more embodiments of the disclosure. The method 662 may be performed by, for example, a computing device such as computing device 116, previously described in connection with Figure 1.

As previously described herein, the computing device can generate GCL masks. For example, when the camera is installed/commissioned, and/or if the camera is re-calibrated, the computing device can generate a reference GCL mask according to the methods described above. Additionally, the computing device can generate a GCL mask to compare to the reference GCL mask according to a predetermined schedule. For instance, the computing device can generate a GCL mask and compare the generated GCL mask to the reference GCL mask every 6 hours. The computing device can determine whether the FOV of the camera has changed from the calibrated FOV to a modified FOV based on the comparison, as is further described herein.

For the comparison, the computing device can determine a reference point in the GCL mask. The reference point can be, for instance, a centroid of the generated GCL mask. As used herein, the centroid of an image refers to a point of an image that is the mean position of the points in the image. For example, the centroid of the generated GCL mask can be a weighted average of the pixel coordinates that make up the generated GCL mask. The weights for the pixel coordinates can be the intensity of the white pixels in the GCL mask. For instance, the computing device can determine the centroid of the GCL mask based on an intensity of the white pixels in the GCL mask. A similar approach can be utilized to calculate the centroid (e.g., a predetermined centroid) of the reference GCL mask.

At 664, the method 662 includes comparing the centroid of the GCL mask with a predetermined centroid of the reference GCL mask. For example, the computing device can compare the coordinate locations of the centroid of the GCL mask with the predetermined centroid of the reference GCL mask. At 666, the computing device can determine, based on the comparison, a distance between the centroid and the predetermined centroid.

At 668, the computing device can compare the determined distance between the centroid and the predetermined centroid to a threshold distance. At 672, the method 662 includes determining, by the computing device, that the distance between the centroid and the predetermined centroid does not exceed the threshold distance, and as such, determine the FOV of the camera has not changed from the calibrated FOV of the camera.

However, at 670, the method 662 includes determining, by the computing device, that the distance between the centroid and the predetermined centroid does exceed the threshold distance. The distance calculation between the centroid and the predetermined centroid takes in account of the intensity of the pixel along with its position to determine if deviation is within the threshold or not. As a result, the computing device can determine the FOV of the camera has changed from the calibrated FOV of the camera. Accordingly, the computing device can generate a notification based on the determination that the FOV of the camera has changed from the calibrated FOV to a modified FOV. The notification can serve to alert a user that the FOV of the camera has been changed so that steps can be taken to address the change in the FOV. The notification can be transmitted to a mobile device of a user, another computing device at the airport, a remote computing device, and/or to any other device. Additionally, in some examples, the computing device can cause the camera to be adjusted to correct the FOV from the modified FOV back to the calibrated FOV, as previously described above.

Figure 7A illustrates an example of a first field of view of a camera and a second field of view of the camera, in accordance with one or more embodiments of the disclosure. As illustrated in Figure 7A, the first field of view can be a calibrated FOV 708. The calibrated FOV 708 can include the apron area 704, including GCL lines 712. As illustrated in Figure 7A, the calibrated FOV 708 can include a portion of a maintenance pathway in the apron area 704 of the airport having a width of "X" as indicated in Figure 7A.

In an example, the camera having the calibrated FOV 708 may experience high winds that can cause the FOV to change (e.g., as a result of the camera being tilted downwards as oriented in Figure 7A) from the calibrated FOV 708 to the modified FOV 710. In the modified FOV 710, the modified FOV 710 can still include the apron area 704, including the GCL lines 712. However, the modified FOV 710 can include a larger portion of the maintenance pathway of the apron area 704 of the airport, as the width is indicated by "Y" which is greater than the "X" width in the calibrated FOV 708. Such a change in the FOV may result in the VDGS system at this apron area 704 not being able to detect objects in the apron area 704 in a direction extending away from the camera, as the camera has been tilted downwards resulting in the view of the FOV of the camera being diminished in the direction extending away from the camera.

Figure 7B illustrates an example of a comparison 774 of a generated GCL mask with a reference GCL mask, in accordance with one or more embodiments of the disclosure. The computing device can generate a GCL mask and compare the generated GCL mask to a reference GCL mask as previously described above.

As illustrated in Figure 7B, the computing device can perform a comparison 774 of the centroid 776 of the GCL mask with the centroid 778 of the reference GCL mask. Based on the comparison, the computing device can determine a distance 779 between the centroid 776 of the GCL mask and the centroid 778 of the reference GCL mask. Based on the distance 779 exceeding a threshold value, the computing device can determine that the FOV of the camera has changed from the calibrated FOV to a modified FOV, and can generate a notification based on such a determination.

Figure 8 illustrates an example of a method 884 for automatically correcting a field of view of a camera to a calibrated field of view, in accordance with one or more embodiments of the disclosure. As mentioned above, in response to the FOV of the camera being changed from the calibrated FOV of the camera, the computing device can cause the camera to be adjusted to automatically correct the FOV of the camera to the calibrated FOV of the camera, as is further described herein.

At 886, the method 884 includes determining the FOV of the camera has changed from the calibrated FOV of the camera. In response, at 887, the method includes determining an amount of shift of the GCL line. For example, the computing device can determine the GCL line has shifted in the FOV of the camera a certain number of pixels relative to the GCL line in the calibrated FOV of the camera.

At 888, the method 884 includes determining whether the GCL line shift is greater than a threshold amount. If the computing device determines the GCL line has shifted a number of pixels that is less than a threshold number of pixels, at 889, the computing device can determine to use the existing FOV of the camera. However, the computing device can determine the GCL line has shifted a number of pixels that exceeds the threshold amount of pixels.

In such an example, the computing device can find, at 890, a region of interest (ROI) point in the FOV of the camera. At 891, the computing device can determine whether a number of ROI points in the FOV has been reduced. At 892, in response to the number of ROI points in the FOV not being reduced, the computing device can determine to use the existing FOV. However, in response to the number of ROI points in the FOV being reduced, the computing device can determine a direction of the change (e.g., the shift) in the GCL line and value of the change (e.g., the shift) of the GCL line relative to the calibrated FOV of the camera. Finally, at 894, the computing device can create a shifted ROI point, and add shifted pixels and redraw the FOV. For example, the computing device can create a new ROI point that is shifted based on the ROI that is lost, and add shifted pixels to the old ROI point and redraw the FOV.

Accordingly, determining a change in a field of view of a camera for an apron area of an airport can inform a user that an FOV of the camera has changed. Utilizing the GCL as a pre-existing reference point in the FOV of the camera can allow for determining the change in the FOV for an airport and allow for actions to be taken to bring the FOV back to a calibrated FOV. The calibrated FOV of the camera can ensure the VDGS system is able to continue to detect objects located in the apron area that should not be located in the apron area, improving the safety of the apron area and the airport, as compared with previous approaches.

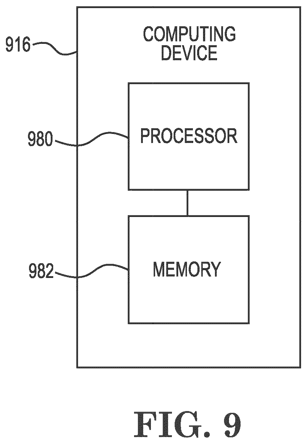

Figure 9 is an example of a computing device 916 for determining whether a change in a field of view of a camera for an apron area of an airport has occurred, in accordance with one or more embodiments of the disclosure. As illustrated in Figure 9, the computing device 916 can include a memory 982 and a processor 980 for determining a change in a field of view of a camera for an apron area of an airport, in accordance with the present disclosure.

The memory 982 can be any type of storage medium that can be accessed by the processor 980 to perform various examples of the present disclosure. For example, the memory 982 can be a non-transitory computer readable medium having computer readable instructions (e.g., executable instructions/computer program instructions) stored thereon that are executable by the processor 880 for determining a change in a field of view of a camera for an apron area of an airport in accordance with the present disclosure.

The memory 982 can be volatile or nonvolatile memory. The memory 882 can also be removable (e.g., portable) memory, or non-removable (e.g., internal) memory. For example, the memory 982 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 982 is illustrated as being located within computing device 916, embodiments of the present disclosure are not so limited. For example, memory 982 can also be located internal to another computing resource (e.g., enabling computer readable instructions to be downloaded over the Internet or another wired or wireless connection).

The processor 980 may be a central processing unit (CPU), a semiconductor-based microprocessor, and/or other hardware devices suitable for retrieval and execution of machine-readable instructions stored in the memory 982.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device for determining a change in a field of view of a camera for an apron area of an airport, comprising:
a memory; and
a processor configured to execute executable instructions stored in the memory to:
compare a ground center line (GCL) mask, generated from an image of an apron area of an airport captured by a camera, with a reference GCL mask;
determine whether a field of view (FOV) of the camera has changed from a calibrated FOV of the camera based on the comparison; and
generate a notification based on the determination.

2. The computing device of claim 1, wherein the processor is configured to execute the instructions to determine the FOV of the camera has changed from the calibrated FOV of the camera in response to a distance between a reference point of the GCL mask and a reference point of the reference GCL mask exceeding a threshold amount.

3. The computing device of claim 2, wherein in response to the FOV of the camera being changed from the calibrated FOV of the camera, the processor is configured to execute the instructions to generate the notification.

4. The computing device of claim 2, wherein in response to the FOV of the camera being changed from the calibrated FOV of the camera, the processor is configured to execute the instructions to cause the camera to be adjusted to automatically correct the FOV of the camera to the calibrated FOV of the camera utilizing at least one of a direction of change of the GCL line, a value of change of the GCL line, and a region of interest point.

5. The computing device of claim 1, wherein the image is from a video feed of the apron area captured by the camera.

6. The computing device of claim 1, wherein the camera is positioned at the airport such that the calibrated FOV of the camera is substantially perpendicular to a physical GCL located on the apron area.

7. The computing device of claim 1, wherein the reference GCL mask and the GCL mask are digital binary images.

8. A method for determining a change in a field of view of a camera for an apron area of an airport, comprising:
generating, by a computing device, a ground center line (GCL) mask from an image of an apron area of an airport captured by a camera, wherein the image of the apron area includes a physical GCL located on the apron area;
comparing, by the computing device, the GCL mask with a reference GCL mask;
determining, by the computing device, whether a field of view (FOV) of the camera has changed from a calibrated FOV of the camera based on the comparison; and
generating, by the computing device, a notification based on the determination.

9. The method of claim 8, wherein the method includes generating, by the computing device, the GCL mask according to a mask generation process.

10. The method of claim 9, wherein the mask generation process includes converting the image of the apron area of the airport captured by the camera to:
a hue saturation value (HSV) color space image; and
a black and white (BW) color space image.

11. The method of claim 10, wherein the mask generation process further includes:
filtering yellow pixels of the HSV color space image such that a first set of pixels of the HSV color space image having a yellow color value falling outside of a predefined range of yellow color values are discarded; and
generating a yellow-filtered GCL mask utilizing a second set of pixels of the HSV color space image having a yellow color value falling inside of the predefined range, wherein the yellow-filtered GCL mask includes lines that corresponding to the physical GCL.

12. The method of claim 10, wherein the mask generation process further includes:
applying a Canny edge detector process to the BW color space image; and
applying a Hough transform to the BW color space image;
wherein the Canny edge detector process and the Hough transform detect a plurality of lines in the BW color space image.

13. The method of claim 12, wherein the mask generation process further includes:
filtering the plurality of lines in the BW color space image such that a first subset of lines of the plurality of lines falling outside of a range of angles are discarded; and
generating a line GCL mask utilizing a second subset of lines of the plurality of lines falling inside of the range of angles, wherein the second subset of lines are grouped and filled;
wherein the range of angles include angles of the camera relative to the physical GCL.

14. The method of claim 10, wherein the mask generation process includes combining a yellow-filtered GCL mask with a line GCL mask to generate the GCL mask.

15. The method of claim 10, wherein the method further includes generating, by the computing device, the reference GCL mask according to the mask generation process.
